(19) Europäisches Patentamt
European Patent Office
Office européen des brevets

(11) **EP 2 350 782 B1**

(12) **EUROPEAN PATENT SPECIFICATION**

(45) Date of publication and mention of the grant of the patent:
**10.04.2019 Bulletin 2019/15**

(51) Int Cl.:
*G06F 3/01* (2006.01)     *G06F 3/0346* (2013.01)

(21) Application number: **09821282.2**

(86) International application number:
**PCT/US2009/060908**

(22) Date of filing: **15.10.2009**

(87) International publication number:
**WO 2010/045498 (22.04.2010 Gazette 2010/16)**

(54) **MOBILE DEVICES WITH MOTION GESTURE RECOGNITION**

MOBILE VORRICHTUNGEN MIT BEWEGUNGSGESTENERKENNUNG

DISPOSITIFS MOBILES AVEC RECONNAISSANCE DE GESTES DE MOUVEMENT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **15.10.2008 US 252322**

(43) Date of publication of application:
**03.08.2011 Bulletin 2011/31**

(73) Proprietor: **InvenSense, Inc.**
**Sunnyvale, California 94089 (US)**

(72) Inventors:
• **SACHS, David**
**Sunnyvale**
**CA 94085 (US)**
• **NASIRI, Steven, S.**
**Saratoga**
**CA 95070 (US)**

• **JIANG, Joseph**
**San Jose**
**CA 95129 (US)**
• **GU, Anjia**
**Stanford, CA 94305 (US)**

(74) Representative: **Shipp, Nicholas et al**
**Kilburn & Strode LLP**
**Lacon London**
**84 Theobalds Road**
**London WC1X 8NL (GB)**

(56) References cited:
**WO-A1-2006/046098     US-A1- 2005 212 751**
**US-A1- 2005 212 751     US-A1- 2006 061 545**
**US-A1- 2006 164 385     US-A1- 2006 185 502**
**US-A1- 2007 125 852     US-A1- 2008 088 602**

**Description**

FIELD OF THE INVENTION

The present invention relates generally to motion sensing devices, and more specifically to recognizing motion gestures based on motion sensors of a motion sensing device.

BACKGROUND OF THE INVENTION

Motion sensors, such as inertial sensors like accelerometers or gyroscopes, can be used in electronic devices. Accelerometers can be used for measuring linear acceleration and gyroscopes can be used for measuring angular velocity of a moved device. The markets for motion sensors include mobile phones, video game controllers, PDAs, mobile internet devices (MIDs), personal navigational devices (PNDs), digital still cameras, digital video cameras, and many more. For example, cell phones may use accelerometers to detect the tilt of the device in space, which allows a video picture to be displayed in an orientation corresponding to the tilt. Video game console controllers may use accelerometers to detect motion of the hand controller that is used to provide input to a game. Picture and video stabilization is an important feature in even low- or mid-end digital cameras, where lens or image sensors are shifted to compensate for hand jittering measured by a gyroscope. Global positioning system (GPS) and location base service (LBS) applications rely on determining an accurate location of the device, and motion sensors are often needed when a GPS signal is attenuated or unavailable, or to enhance the accuracy of GPS location finding.

Most existing portable (mobile) electronic devices tend to use only the very basic of motion sensors, such as an accelerometer with "peak detection" or steady state measurements. For example, current mobile phones use an accelerometer to determine tilting of the device, which can be determined using a steady state gravity measurement. Such simple determination cannot be used in more sophisticated applications using, for example, gyroscopes or other applications having precise timing requirements. Without a gyroscope included in the device, the tilting and acceleration of the device is not sensed reliably. And since motion of the device is not always linear or parallel to the ground, measurement of several different axes of motion using an accelerometer or gyroscope is needed for greater accuracy.

More sophisticated motion sensors typically are not used in electronic devices. Some attempts have been made for more sophisticated motion sensors in particular applications, such as detecting motion with certain movements. But most of these efforts have failed or are not robust enough as a product. This is because the use of motion sensors to derive motion is complicated. For example, when using a gyroscope, it is not trivial to identify the tilting or movement of a device. Using motion sensors for image stabilization, for sensing location, or for other sophisticated applications, requires in-depth understanding of motion sensors, which makes motion sensing design very difficult.

Furthermore, everyday portable consumer electronic devices for the consumer market are desired to be low-cost. Yet the most reliable and accurate inertial sensors such as gyroscopes and accelerometers are typically too expensive for many consumer products. Low-cost inertial sensors can be used bring many motion sensing features to portable electronic devices. However, the accuracy of such low-cost sensors are limiting factors for more sophisticated functionality.

For example, such functionality can include motion gesture recognition implemented on motion sensing devices to allow a user to input commands or data by moving the device or otherwise cause the device sense the user's motion. For example, gesture recognition allows a user to easily select particular device functions by simply moving, shaking, or tapping the device. Prior gesture recognition for motion sensing devices typically consists of examining raw sensor data such as data from gyroscopes or accelerometers, and either hard-coding patterns to look for in this raw data, or using machine learning techniques (such as neural networks or support vector machines) to learn patterns from this data. In some cases the required processing resources for detecting gestures using machine learning can be reduced by first using machine learning to learn the gesture, and then hard-coding and optimizing the result of the machine learning algorithm.

Several problems exist with these prior techniques. One problem is that gestures are very limited in their applications and functionality when implemented in portable devices. Another problem is that gestures are often not reliably recognized. For example, raw sensor data is often not the best data to examine for gestures because it can greatly vary from user to user for a particular gesture. In such a case, if one user trains a learning system or hard-codes a pattern detector for that user's gestures, these gestures will not be recognized correctly when a different user uses the device. One example of this is in the rotation of wrist movement. One user might draw a pattern in the air with the device without rotating his wrist at all, but another user might rotate his wrist while drawing the pattern. The resulting raw data will look very different from user to user. A typical solution is to hard-code or train all possible variations of a gesture, but this solution is expensive in processing time and difficult to implement.

Accordingly, a system and method that provides varied, robust and accurate gesture recognition with low-cost inertial sensors would be desirable in many applications.

US 2005/212751 discloses a motion controlled handheld device that includes a display having a viewable surface and operable to generate an image and a gesture database maintaining a plurality of predefined gestures. Each gesture is defined by a motion of the device with respect to a first position of the device. The device includes an application having a plurality of predefined commands and a motion detection module operable to detect motion of the handheld device within three dimensions and to identify components of the motion in relation to the viewable surface. The device includes a user interface operable to receive user input associating selected ones of the gestures with corresponding ones of the commands and a gesture mapping database comprising a command map for the application. The command map comprises mappings of the selected gestures to the corresponding commands as indicated by the user input. The device also includes a control module operable to load the application, to track movement of the handheld device using the motion detection module, to compare the tracked movement against the gestures to determine a matching one of the gestures, to identify, using the command map, the command mapped to the matching gesture, and to perform the identified command using the application.

WO 2006/046098 discloses an apparatus and method for tapping input on electronic devices. An electronic device, such as a phone, a media playing device, or a personal digital assistant, detects a tap by a user on a surface of the device using one or more motion sensors. Based on the data from the motion sensors, a location upon the surface of the device is determined, and based on that location, an action is performed. Tap input may be interpreted based upon a mode of operation of the device, orientation of the device, timing of the taps, or based on user-defined criteria. An attachable tapping template is provided which can be attached to an electronic device and share information about the template with the device using a radio frequency or electrical identifier.

US2007/125852 describes an apparatus, method and computer program product which establish a user interface for portable media players in which a user can mix, shuffle, randomize, or otherwise alter the selection and/or ordering of media items stored within and/or played by the portable media player by simply shaking the portable media player in a characteristic manner.

## SUMMARY OF THE INVENTION

The invention of the present application relates to mobile devices providing motion gesture recognition. In one aspect, a method for processing motion of a portable electronic device to control the portable electronic device as defined in claim 1 is provided.

In another aspect of the invention, there is provided a portable electronic device for sensing motion gestures as defined in claim 2.

In an example, a method for recognizing a gesture performed by a user using a motion sensing device includes receiving motion sensor data in device coordinates indicative of motion of the device, the motion sensor data received from a plurality of motion sensors of the motion sensing device including a plurality of rotational motion sensors and linear motion sensors. The motion sensor data is transformed from device coordinates to world coordinates, the motion sensor data in the device coordinates describing motion of the device relative to a frame of reference of the device, and the motion sensor data in the world coordinates describing motion of the device relative to a frame of reference external to the device. A gesture is detected from the motion sensor data in the world coordinates.

In another example, a system for detecting gestures includes a plurality of motion sensors providing motion sensor data, the motion sensors including a plurality of rotational motion sensors and linear motion sensors. At least one feature detector is each operative to detect an associated data feature derived from the motion sensor data, each data feature being a characteristic of the motion sensor data, and each feature detector outputting feature values describing the detected data feature. At least one gesture detector is each operative to detect a gesture associated with the gesture detector based on the feature values.

Aspects of the present invention provide more flexible, varied, robust and accurate recognition of motion gestures from inertial sensor data of a mobile or handheld motion sensing device. Multiple rotational motion sensors and linear motion sensors are used, and appropriate sets of gestures can be recognized in different operating modes of the device. The use of world coordinates for sensed motion data allows minor variations in motions from user to user during gesture input to be recognized as the same gesture without significant additional processing. The use of data features in motion sensor data allows gestures to be recognized with reduced processing compared to processing all the motion sensor data.

## BRIEF DESCRIPTION OF THE FIGURES

Figure 1 is a block diagram of a motion sensing device suitable for use with the present invention;

Figure 2 is a block diagram of one embodiment of a motion processing unit suitable for use with the present invention;

Figures 3A and 3B are diagrammatic illustrations showing different motions of a device in space, as moved by a user performing a gesture;

Figures 4A and 4B are diagrammatic illustrations showing the motions of Figs. 3A and 3B as appearing using augmented sensor data;

Figures 5A-5C are diagrammatic illustrations showing different user positions when using a motion sensing device;

Figures 6A-6C are diagrammatic illustrations showing different coordinate systems for sensing motion data;

Figure 7 is a block diagram illustrating a system of the present invention for producing augmented data for recognizing motion gestures;

Figures 8A and 8B are diagrammatic illustrations showing rotational movement of a device indicating whether or not a user is intending to input a gesture;

Figure 9 is a flow diagram illustrating a method of the present invention for recognizing gestures based on an operating mode of the portable electronic device;

Figures 10A and 10B are diagrammatic illustrations of motion data of example shake gestures;

Figures 11A-10F are diagrammatic illustrations showing magnitude peaks for gesture recognition;

Figures 12A and 12B are diagrammatic illustrations of two examples of tap gestures;

Figures 13A and 13B are diagrammatic illustrations of detecting a tap gesture by rejecting particular spikes in motion data;

Figure 14 is a diagrammatic illustration of motion data of an example circle gesture;

Figure 15 is a diagrammatic illustration of examples of character gestures;

Figure 16 is a diagrammatic illustration showing one example of a set of data features of device movement that can be processed for gestures;

Figure 17 is a block diagram illustrating one example of a system for recognizing and processing gestures including data features;

Figure 18 is a block diagram illustrating one example of distributing the functions of the gesture recognition system of Fig. 16.

DETAILED DESCRIPTION

The present invention relates generally to motion sensing devices, and more specifically to recognizing motion gestures using motion sensors of a motion sensing device. The following description is presented to enable one of ordinary skill in the art to make and use the invention and is provided in the context of a patent application and its requirements. Various modifications to the preferred embodiment and the generic principles and features described herein will be readily apparent to those skilled in the art.

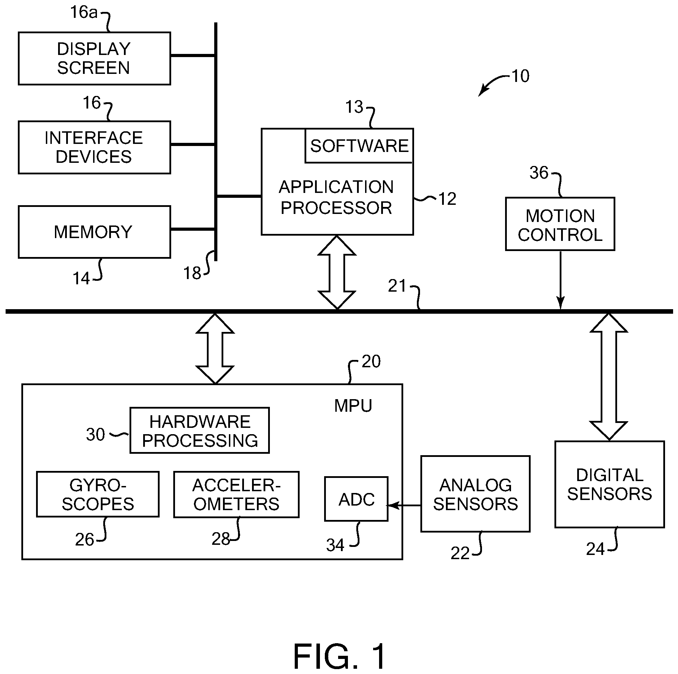

To more particularly describe the features of the present invention, please refer to Figures 1-18 in conjunction with the discussion below.

Figure 1 is a block diagram of one example of a motion sensing system or device 10 suitable for use with the present invention. Device 10 can be implemented as a device or apparatus, such as a portable device that can be moved in space by a user and its motion and/or orientation in space therefore sensed. For example, such a portable device can be a mobile phone, personal digital assistant (PDA), video game player, video game controller, navigation device, mobile internet device (MID), personal navigation device (PND), digital still camera, digital video camera, binoculars, telephoto lenses, or other portable device, or a combination of one or more of these devices. In some embodiments, the device 10 is a self-contained device that includes its own display and other output devices in addition to input devices. In other embodiments, the portable device 10 only functions in conjunction with a non-portable device such as a desktop computer, electronic tabletop device, server computer, etc. which can communicate with the moveable or portable device 10, e.g., via network connections.

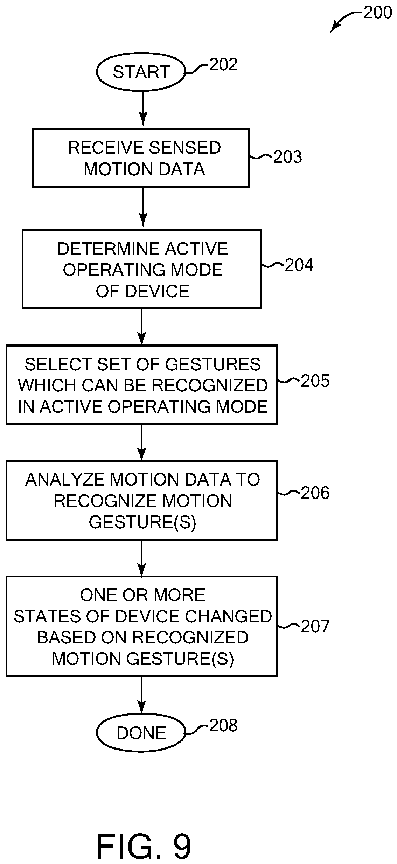

Device 10 includes an application processor 12, memory 14, interface devices 16, a motion processing unit 20, analog sensors 22, and digital sensors 24. Application processor 12 can be one or more microprocessors, central processing units (CPUs), or other processors which run software programs for the device 10. For example, different software application programs such as menu navigation software, games, camera function control, navigation software, and phone or a wide variety of other software and functional interfaces can be provided. In some embodiments, multiple different applications can be provided on a single device 10, and in some of those embodiments, multiple applications can run simultaneously on the device 10. In some embodiments, the application processor implements multiple different operating modes on the device 10, each mode allowing a different set of applications to be used on the device and a different set of gestures to be detected. This is described in greater detail below with respect to Fig. 9.

Multiple layers of software can be provided on a computer readable medium such as electronic memory or other storage medium such as hard disk, optical disk, etc., for use with the application processor 12. For example, an operating system layer can be provided for the device 10 to control and manage system resources in real time, enable functions of application software and other layers, and interface application programs with other software and functions of the device 10. A motion algorithm layer can provide motion algorithms that provide lower-level processing for raw sensor data provided from the motion sensors and other sensors. A sensor device driver layer can provides a software interface to the hardware sensors of the device 10.

Some or all of these layers can be provided in software 13 of the processor 12. For example, in some embodiments, the processor 12 can implement the gesture processing and recognition described herein based on sensor inputs from a motion processing unit (MPU™) 20 (described below). Other embodiments can allow a division of processing between the MPU 20 and the processor 12 as is appropriate for the applications and/or hardware used, where some of the layers (such as lower level software layers) are provided in the MPU. For example, in embodiments allowing processing by the MPU 20, an API layer can be implemented in layer 13 of processor 12 which allows communication of the states of application programs running on the processor 12 to the MPU 20 as well as API commands (e.g., over bus 21), allowing the MPU 20 to implement some or all of the gesture processing and recognition described herein. Some embodiments of API implementations in a motion detecting device are described in co-pending U.S. Patent Application No. 12/106,921.

Device 10 also includes components for assisting the application processor 12, such as memory 14 (RAM, ROM, Flash, etc.) and interface devices 16. Interface devices 16 can be any of a variety of different devices providing input and/or output to a user, such as a display screen, audio speakers, buttons, touch screen, joystick, slider, knob, printer, scanner, camera, computer network I/O device, other connected peripheral, etc. For example, one interface device 16 included in many embodiments is a display screen 16a for outputting images viewable by the user. Memory 14 and interface devices 16 can be coupled to the application processor 12 by a bus 18.

Device 10 also can include a motion processing unit (MPU™) 20. The MPU is a device including motion sensors that can measure motion of the device 10 (or portion thereof) in space. For example, the MPU can measure one or more axes of rotation and one or more axes of acceleration of the device. In preferred embodiments, at least some of the motion sensors are inertial sensors, such as gyroscopes and/or accelerometers. In some embodiments, the components to perform these functions are integrated in a single package. The MPU 20 can communicate motion sensor data to an interface bus 21, e.g., I2C or Serial Peripheral Interface (SPI) bus, to which the application processor 12 is also connected. In one embodiment, processor 12 is a controller or master of the bus 21. Some embodiments can provide bus 18 as the same bus as interface bus 21.

MPU 20 includes motion sensors, including one or more rotational motion sensors 26 and one or more linear motion sensors 28. For example, in some embodiments, inertial sensors are used, where the rotational motion sensors are gyroscopes and the linear motion sensors are accelerometers. Gyroscopes 26 can measure the angular velocity of the device 10 (or portion thereof) housing the gyroscopes 26. From one to three gyroscopes can typically be provided, depending on the motion that is desired to be sensed in a particular embodiment. Accelerometers 28 can measure the linear acceleration of the device 10 (or portion thereof) housing the accelerometers 28. From one to three accelerometers can typically be provided, depending on the motion that is desired to be sensed in a particular embodiment. For example, if three gyroscopes 26 and three accelerometers 28 are used, then a 6-axis sensing device is provided providing sensing in all six degrees of freedom.

In some embodiments the gyroscopes 26 and/or the accelerometers 28 can be implemented as MicroElectro-Mechanical Systems (MEMS). Supporting hardware such as storage registers for the data from motion sensors 26 and 28 can also be provided.

In some embodiments, the MPU 20 can also include a hardware processing block 30. Hardware processing block 30 can include logic or controllers to provide processing of motion sensor data in hardware. For example, motion algorithms, or parts of algorithms, may be implemented by block 30 in some embodiments, and/or part of or all the gesture recognition described herein. In such embodiments, an API can be provided for the application processor 12 to communicate desired sensor processing tasks to the MPU 20, as described above. Some embodiments can include a hardware buffer in the block 30 to store sensor data received from the motion sensors 26 and 28. A motion control 36, such as a button, can be included in some embodiments to control the input of gestures to the electronic device 10, as described in greater detail below.

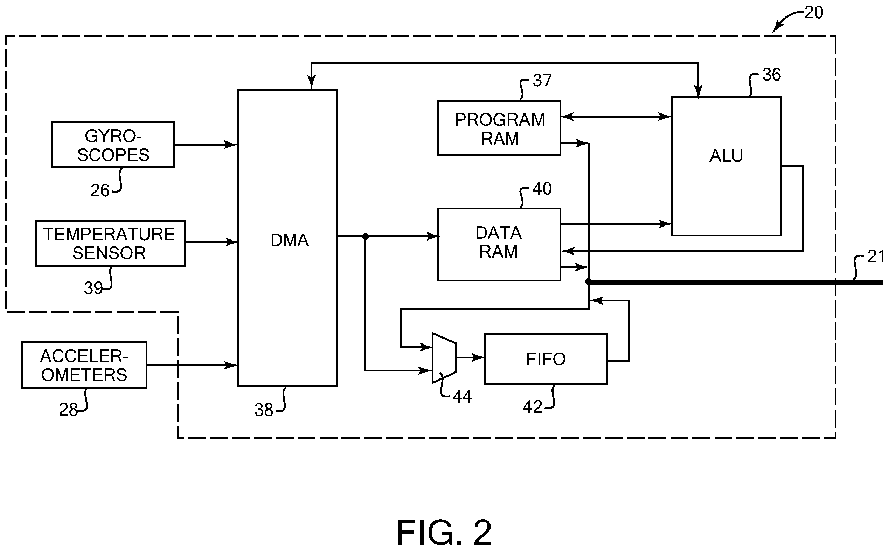

One example of an MPU 20 is described below with reference to Fig. 2. Other examples of an MPU suitable for use with the present invention are described in co-pending U.S. Patent Application No. 11/774,488, filed July 6, 2007, entitled, "Integrated Motion Processing Unit (MPU) With MEMS Inertial Sensing and Embedded Digital Electronics,". Suitable implementations for MPU 20 in device 10 are available from Invensense, Inc. of Sunnyvale, CA.

The device 10 can also include other types of sensors. Analog sensors 22 and digital sensors 24 can be used to provide additional sensor data about the environment in which the device 10 is situation. For example, sensors such one or more barometers, compasses, temperature sensors, optical sensors (such as a camera sensor, infrared sensor, etc.), ultrasonic sensors, radio frequency sensors, or other types of sensors can be provided. In the example implementation shown, digital sensors 24 can provide sensor data directly to the interface bus 21, while the analog sensors can be provide sensor data to an analog-to-digital converter (ADC) 34 which supplies the sensor data in digital form to the interface bus 21. In the example of Fig. 1, the ADC 34 is provided in the MPU 20, such that the ADC 34 can provide the converted digital data to hardware processing 30 of the MPU or to the bus 21. In other embodiments, the ADC 34 can be implemented elsewhere in device 10.

Figure 2 shows one example of an embodiment of motion processing unit (MPU) 20 suitable for use with inventions described herein. The MPU 20 of Fig. 2 includes an arithmetic logic unit (ALU) 36, which performs processing on sensor data. The ALU 36 can be intelligently controlled by one or more programs stored in and retrieved from program RAM (random access memory) 37. The ALU 36 can control a direct memory access (DMA) block 38, which can read sensor data independently of the ALU 36 or other processing unit, from motion sensors such as gyroscopes 26 and accelerometers 28 as well as other sensors such as temperature sensor 39. Some or all sensors can be provided on the MPU 20 or external to the MPU 20; e.g., the accelerometers 28 are shown in Fig. 2 as external to the MPU 20. The DMA 38 can also provide interrupts to the ALU regarding the status of read or write operations. The DMA 38 can provide sensor data read from sensors to a data RAM 40 for storage. The data RAM 40 provides data to the ALU 36 for processing, and the ALU 36 provides output, including processed data, to the data RAM 40 for storage. Bus 21 (also shown in Fig. 1) can be coupled to the outputs of data RAM 40 and/or FIFO buffer 42 so that application processor 12 can read the data read and/or processed by the MPU 20.

A FIFO (first in first out) buffer 42 can be used as a hardware buffer for storing sensor data which can be accessed by the application processor 12 over the bus 21. The use of a hardware buffer such as buffer 42 is described in several embodiments below. For example, a multiplexer 44 can be used to select either the DMA 38 writing raw sensor data to the FIFO buffer 42, or the data RAM 40 writing processed data to the FIFO buffer 42 (e.g., data processed by the ALU 36).

The MPU 20 as shown in Fig. 2 thus can support one or more implementations of processing motion sensor data, including the gesture processing and recognition described herein. For example, the MPU 20 can process raw sensor data fully, where programs in the program RAM 37 can control the ALU 36 to intelligently process sensor data and provide high-level data to the application processor 12 and application programs running thereon. Or, raw sensor data can be pre-processed or processed partially by the MPU 20 using the ALU 36, where the processed data can then be retrieved by the application processor 12 for additional low-level processing on the application processor 12 before providing resulting high-level information to the application programs. Or, raw sensor data can be merely buffered by the MPU 20, where the raw sensor data is retrieved by the application processor 12 for low-level processing. In some embodiments, different applications or application programs running on the same device 10 can use different ones of these processing methods as is most suitable to the application or program.

Recognizing Motion Gestures

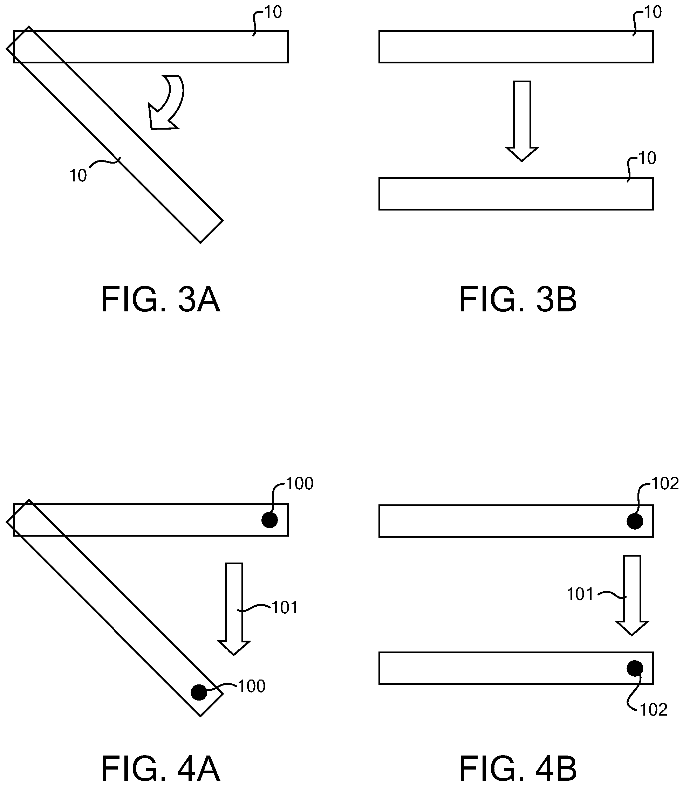

Figures 3A and 3B are diagrammatic illustrations showing different motions of a device 10 in space, as moved by a user performing a gesture. A "gesture" or "motion gesture," as referred to herein, is a predefined motion or set of motions of the device which, when recognized by the device have occurred, triggers one or more associated functions of the device. This motion can be a contained set of motions such as a shake or circle motion, or can be a simple movement of the device, such as tilting the device in a particular axes or angle. The associated functions can include, for example, scrolling a list or menu displayed on a display screen of the device in a particular direction, selecting and/or manipulating a displayed item (button, menu, control), providing input such as desired commands or data (such as characters, etc.) to a program or interface of the device, turn on or off main power to the device, and so on.

An aspect of the invention pre-processes the raw sensor data of the device 10 by changing coordinate systems or converting to other physical parameters, such that the resulting "augmented data" looks similar for all users regardless of the small, unintentional differences in user motion. This augmented data can then be used to train learning systems or hard-code pattern recognizers resulting in much more robust gesture recognition, and is a cost effective way of utilizing motion sensor data from low-cost inertial sensors to provide a repeatable and robust gesture recognition.

Some embodiments of the invention use inertial sensors such as gyroscopes and/or accelerometers. Gyroscopes output angular velocity in device coordinates, while accelerometers output the sum of linear acceleration in device coordinates and tilt due to gravity. The outputs of gyroscopes and accelerometers is often not consistent from user to user or even during the use of the same user, despite the users intending to perform or repeat the same gestures. For example, when a user rotates the device in a vertical direction, a Y-axis gyroscope may sense the movement; however, with a different wrist orientation of a user, the Z-axis gyroscope may sense the movement.

Training a system to respond to the gyroscope signal differently depending on the tilt of the device (where the tilt is extracted from the accelerometers and the X-axis gyroscope) would be very difficult. However, doing a coordinate transform from device coordinates to world coordinates simplifies the problem. Two users providing different device tilts are both rotating the device downward relative to the world external to the device. If the augmented data angular velocity in world coordinates is used, then the system will be more easily trained or hard-coded, because the sensor data has been processed to look the same for both users.

In the examples of Figs. 3A and 3B, while performing a "straight down" movement of the device 10 as a gesture or part of a gesture, one user might use a linear movement as shown in Fig. 3A, and a different user might use a tilting movement as shown in Fig. 3B.

When sensing the motion of Fig. 3A, the gyroscope(s) will have a large sensed signal, and the accelerometer will be responding to gravity. When sensing the motion of Fig. 3B, the gyroscope will have no sensed signal, and the accelerometer will be responding to linear acceleration, which looks significantly different from gravity. Both users think they are doing the same movement; this is because they each see the tip of their device moving downward.

The two styles of movement can be made to appear the same by providing augmented data by first converting the sensor data from device coordinates to world coordinates. Figure 4A shows the case of the rotational movement about a pivot point, where the device 10 is projected outward to find the linear movement of the tip 100 of the device. In this case, the augmented data being used as the input to the gesture recognizer can be the linear trajectory 101 of the tip of the device, obtained by scaling the rotational information relative to a moment arm. The moment arm can be approximated by comparing angular acceleration, derived from the derivative of the gyroscope, with linear acceleration, derived from the accelerometer after removing the effects of gravity. Figure 4B shows the case of the linear movement, where the linear trajectory 101 of the tip 102 of the device 10 can be obtained directly by reading the accelerometers on the device. Thus, regardless of whether the device was rotated or moved linearly, augmented data describing a linear trajectory 101 will be the same, and a gesture mapped to that motion can be recognized from either type of motion and used to select one or more associated functions of the device.

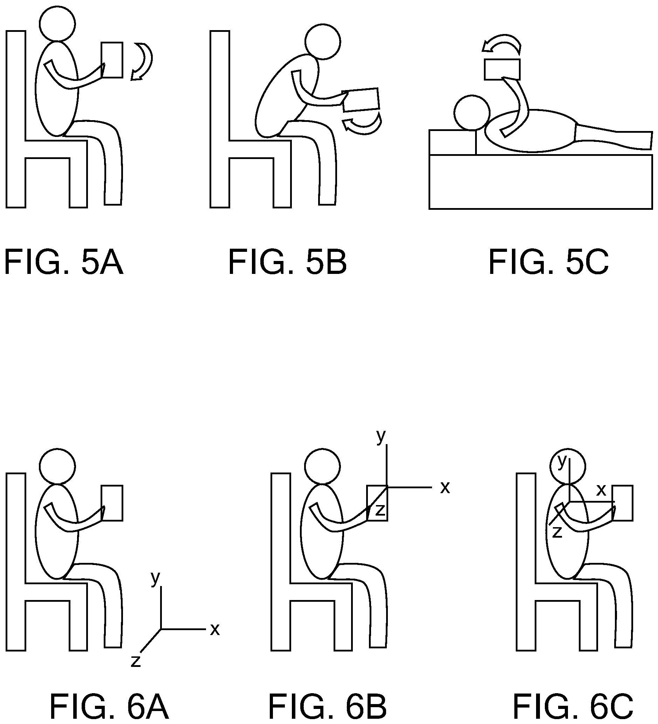

In some cases, recognizing gestures only relative to the world may not produce the desired augmented data. When using a device 10 that is portable, the user may not intend to perform motion gestures relative to the world. As shown in Figures 5A, 5B, and 5C, for example, a user may perform a gesture sitting up (Fig. 5A), and later perform the gesture lying in bed (Fig. 5C). In this example a vertical gesture performed sitting up would thus later be performed horizontally relative to the world when in bed. In another example, one user may perform a vertical (relative to the world) gesture while sitting up straight (Fig. 5A), and a different user may perform the gesture while slouching (Fig. 5B), making the device 10 closer to horizontal relative to the world than when sitting up.

One way to avoid these problems is to examine what the user is trying to do. The user performs gestures relative to his or her own body, which may be vertical or horizontal; this is called "human body coordinates." Another way to describe "human body coordinates" is as "local world coordinates." Figures 6A, 6B, and 6C illustrate world coordinates (Fig. 6A), device coordinates (Fig. 6B), and local world coordinates (Fig. 6C).

However, it is not possible to measure local world coordinates directly without also having sensors on the user's body. An indirect way to accomplish the same task is to assume that the device is being held in a particular way by the user relative to the user's body when the gesture is attempted and so the user's body position can be assumed based on the device position to approximate local world coordinates. When the device is moved slowly, the local world coordinate system is updated and moved while the device is being moved, so that the local world coordinate system tracks the direction of the user's body. It is assumed that with slow movement, the user is simply looking at or adjusting the device without intending to input any gestures, and the local world coordinate system should thus track the user orientation. The slow movement can be determined as movement under a predetermined threshold velocity or other motion-related threshold. For example, when the angular velocity of the device 10 (as determined from gyroscope data) is under a threshold angular velocity, and the linear velocity of the device 10 (as determined from accelerometer data) is under a threshold linear velocity, the movement can be considered slow enough to update the local world coordinate system with the movement of the device. Alternatively, one of the angular velocity or linear velocity can be examined for this purpose.

However, when the device is moved quickly (over the threshold(s)), the movement is assumed to be for inputting a gesture, and the local world coordinate system is kept fixed while the device is moving. The local world coordinate system for the gesture will then be the local world coordinate system just before the gesture started; the assumption is that the user was directly looking at a screen of the device before beginning the gesture and the user remains approximately in the same position during the gesture. Thus, while the device is stationary or being moved slowly, the "world" is updated, and when the device is moved quickly, the gesture is analyzed relative to last updated "world," or "local world."

Thus, motion sensor data in device coordinates is received from the sensors of the device, where the data in device coordinates describes motion of the device relative to a frame of reference of the device. The data in the device coordinates is transformed to augmented motion sensor data in world coordinates, such as local world coordinates, where the data in world coordinates describes motion of the device relative to a frame of reference external to the device. In the case of local world coordinates, the frame of reference is the user's body. A gesture can be detected more accurately and robustly from the motion sensor data in the world coordinates.

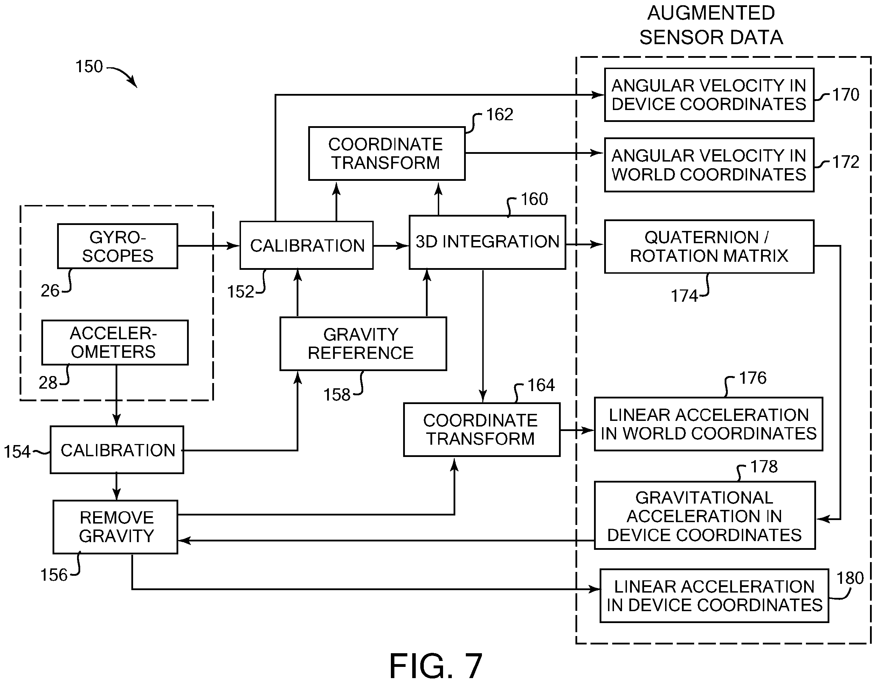

Figure 7 is a block diagram illustrating a system 150 of the present invention for producing the augmented data described above for recognizing motion gestures. System 150 is implemented on the device 10, e.g., in the processor 12 and/or the MPU 20, and uses the raw sensor data from gyroscopes 26 and accelerometers 28 to determine the motion of the device and to derive augmented data from that motion to allow more accurate recognition of gestures from the motion data.

System 150 includes a gyroscope calibration block 152 that receives the raw sensor data from the gyroscopes 26 and which calibrates the data for accuracy. The output of the calibration block 152 is angular velocity in device coordinates 170, and can be considered one portion of the augmented sensor data provided by system 150.

System 150 also includes an accelerometer calibration block 154 that receives the raw sensor data from the accelerometers 28 and which calibrates the data for accuracy. For example, such calibration can be the subtraction or addition of a known constant determined for the particular accelerometer or device 10. The gravity removal block 156 receives the calibrated accelerometer data and removes the effect of gravity from the sensor data, thus leaving data describing the linear acceleration of the device 10. This linear acceleration data 180 is one portion of the augmented sensor data provided by system 150. The removal of gravity uses a gravity acceleration obtained from other components, as described below.

A gravity reference block 158 also receives the calibrated accelerometer data from calibration block 154 and provides a gravity vector to the gyroscope calibration block 152 and to a 3D integration block 160. 3-D integration block 160 receives the gravity vector from gravity reference block 158 and the calibrated gyroscope data from calibration block 152. The 3-D integration block combines the gyroscope and accelerometer data to produce a model of the orientation of the device using world coordinates. This resulting model of device orientation is the quaternion / rotation matrix 174 and is one portion of the augmented sensor data provided by system 150. Matrix 174 can be used to provide world coordinates for sensor data from existing device coordinates.

A coordinate transform block 162 receives calibrated gyroscope data from calibration block 152, as well as the model data from the 3-D integration block 160, to produce an angular velocity 172 of the device in world coordinates, which is part of the augmented sensor data produced by the system 150. A coordinate transform block 164 receives calibrated linear acceleration data from the remove gravity block 156, as well as the model data from the 3-D integration block 160, to produce a linear acceleration 176 of the device in world coordinates, which is part of the augmented sensor data produced by the system 150.

Gravitational acceleration data 178 in device coordinates is produced as part of the augmented sensor data of the system 150. The acceleration data 178 is provided by the quaternion / rotation matrix 174 and is a combination of gyroscope data and accelerometer data to obtain gravitational data. The acceleration data 178 is also provided to the remove gravity block 156 to allow gravitational acceleration to be removed from the accelerometer data (to obtain the linear acceleration data 180).

One example follows of the 3-D integration block combining gyroscope and accelerometer data to produce a model of the orientation of the device using world coordinates. Other methods can be used in other embodiments.

The orientation of the device is stored in both quaternion form and rotation matrix form. To update the quaternion, first the raw accelerometer data is rotated into world coordinates using the previous rotation matrix:

$$a' = Ra$$

The vector a contains the raw accelerometer data, R is the rotation matrix representing the orientation of the device, and a' is the resulting acceleration term in world coordinates. A feedback term is generated from the cross product of a' with a vector representing gravity:

$$f = k( \, a \, X \, g)$$

Constant k is a time constant which determines the timescale in which the acceleration data is used. A quaternion update term is generated from this by multiplying with the current quaternion:

$$q_{accelerometer} = fq$$

A similar update term is generated from the gyroscope data using quaternion integration:

$$q_{gyroscope} = 0.5qw(dt)$$

The vector w contains the raw gyroscope data, q is the current quaternion, and dt is the sample time of the sensor data. The quaternion is updated as follows:

$$q' = normalize( q + q_{accelerometer} + q_{gyroscope} )$$

This new quaternion becomes the "current quaternion," and can be converted to a rotation matrix. Angular velocity from both accelerometers and gyroscopes can be obtained as follows:

$$W_{device} = q^{-1}(q_{accelerometer} + q_{gyroscope} / (0.5dt ) )$$

Angular velocity in world coordinates can be obtained as follows:

$$w_{world} = Rw_{device}$$

Linear acceleration in world coordinates can be obtained as follows:

$$a_{world} = a' - g$$

Linear acceleration in device coordinates can be obtained as follows:

$$A_{device} = R^{-1}a_{world}$$

Other Techniques for Improved Gesture Recognition

Relative timing of features in motion data can be used to improve gesture recognition. Different users may perform gestures faster or slower relative to each other, which can make gesture recognition difficult. Some gestures may require particular features (i.e., characteristics) of the sensor data to occur in a particular sequence and with a particular timing. For example, a gesture may be defined as three features occurring in a sequence. For one user, feature 2 might occur 100ms after feature 1, and feature 3 might occur 200ms after feature 2. For a different user performing the gesture more slowly, feature 2 might occur 200ms after feature 1, and feature 3 might occur 400ms after feature 2. If the required timing values are hard-coded, then many different ranges of values will need to be stored, and it will be difficult to cover all possible user variances and scenarios.

To provide a more flexible recognition of gestures that takes into account variance in gesture feature timing, an aspect of the present invention recognizes gestures using relative timing requirements. Thus the timing between different features in motion data can be expressed and detected based on multiples and/or fractions of a basic time period used in that gesture. The basic time period can be, for example, the time between two data features. For example, when relative timing is used, for whatever time t1 exists between features 1 and 2 of a gesture, the time between features 2 and 3 can be defined as approximately two times t1. This allows different users to perform gestures at different rates without requiring algorithms such as Dynamic Time Warping, which are expensive in CPU time.

Relative peaks or magnitudes in motion sensor data can also be used to improve gesture recognition. Similar to the variance in timing of features when gestures are performed by different users or at different times as described above, one user may perform a gesture or provide features with more energy or speed or quickness than a different user, or with variance at different times. For example, a first user may perform movement causing a first feature that is detected by a gyroscope as 100 degrees per second, and causing a second feature that is detected by the gyroscope as 200 degrees per second, while a second user may perform movement causing the first feature that is detected as 200 degrees per second and causing a second feature that is detected as 400 degrees per second. Hard-coding these values for recognition would require training a system with all possible combinations. One aspect of the present invention expresses the features as peak values (maximum or minimum) that are relative to each other within the gesture, such as multiples or fractions of a basic peak magnitude. Thus, if a first peak of a gesture is detected as a magnitude of p1, a second peak must have a magnitude roughly twice p1 to satisfy the requirements of the gesture and be recognized as such.

Rejecting Noise in Gesture Recognition

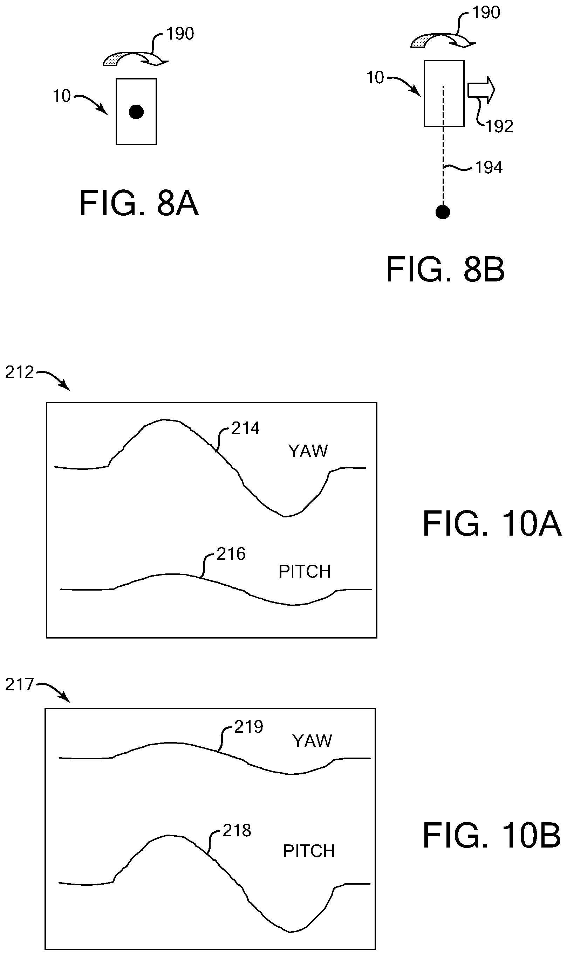

Figures 8A and 8B illustrate rotational movement of a device 10 which can indicate whether or not a user is intending to input a gesture. While raw sensor noise in gesture recognition is usually negligible with good motion sensors, noise from human movement can be significant. This noise can be due to the user's hand shaking unintentionally, from the user adjusting his or her grip on the device, or other incidental motion, which can cause large angular movements and spikes to appear in the sensor data. For very sensitive gestures, it can be difficult to tell the difference between incidental movement not intended for gestures, and movement intended as gestures for triggering association device functions.

One method of the present invention to more accurately determine whether detected motion is intended for a gesture is to correlate an angular gesture with linear acceleration. The presence of linear acceleration indicates that a user is moving the device using the wrist or elbow, rather than just adjusting the device in the hand.

Fig. 8A illustrates pure rotation 190 of the device 10 without the presence of linear acceleration, and can result from the user adjusting his or her grip on the device, for example. Fig. 8B illustrates the device 10 exhibiting rotation 190 that correlates with accompanying linear movement 192, which is more likely to correspond to an intended gesture. The presence of device movement producing linear acceleration can be detected by taking the derivative of the gyroscope sensor data, obtaining angular velocity, and comparing the angular velocity to linear acceleration. The ratio of one to the other can indicate the moment arm 194 about which the device is rotating. Having this parameter as a check will allow the gesture engine to reject movements that are all (or substantially all) rotation, which are caused by the user adjusting the device.

In another method, motion sensor data that may include a gesture is compared to a background noise floor acquired while no gestures are being detected. The noise floor can filter out motions caused by a user with shaky hands, or motions caused by an environment in which there is a lot of background motion, such as on a train. To prevent the gesture triggering due to noise, the signal to noise ratio of the motion sensor data must be above a noise floor value that is predetermined, or dynamically determined based on current detected conditions (e.g., a current noise level can be detected by monitoring motion sensor data over a period of time). In cases with a lot of background noise, the user can still deliver a gesture, but the user will be required to use more power when performing the gesture.

Gestures and Modes of Operation

Figure 9 is a flow diagram illustrating a method 200 of the present invention for recognizing gestures based on an operating mode of the portable electronic device 10. The method 200 can be implemented on the device 10 in hardware and/or software, e.g., in the processor 12 and/or the MPU 20.

The method starts at 202, and in step 203, sensed motion data is received from the sensors 26 and 28, including multiple gyroscopes (or other rotational sensors) and accelerometers as described above. The motion data is based on movement of the device 10 in space. In step 204, the active operating mode of the device 10 is determined, i.e., the operating mode that was active when the motion data was received.

An "operating mode" of the device provides a set of functions and outputs for the user based on that mode, where multiple operating modes are available on the device 10, each operating mode offering a set of different functions for the user. In some embodiments, each operating mode allows a different set of applications to be used on the device. For example, one operating mode can be a telephone mode that provides application programs for a telephone functions, while a different operating mode can provide a picture or video viewer for use with a display screen 16a of the device 10. In some embodiments, operating modes can correspond to broad applications, such as games, image capture and processing, and location detection (e.g., as described in copending application 12/106,921). Alternatively, in other embodiments, operating modes can be defined more narrowly based on other functions or application programs.

The active operating mode is one operating mode that is selected for purposes of method 200 when the motion data was received, and this mode can be determined based on one or more device operating characteristics. For example, the mode can be determined based on user input, such as the prior selection of a mode selection button or control or a detected motion gesture from the user, or other movement and/or orientation of the device 10 in space. The mode may alternatively or additionally be determined based on a prior or present event that has occurred or is occurring; for example, a cellular phone operating mode can automatically be designated the active operating mode when the device 10 receives a telephone call or text message, and while the user responds to the call.

In step 205, a set of gestures is selected, this set of gestures being available for recognition in the active operating mode. In preferred embodiments, at least two different operating modes of the device 10 each has a different set of gestures that is available for recognition when that mode is active. For example, one operating mode may be receptive to character gestures and shake gestures, while a different operating mode may only be receptive to shake gestures.

In step 206, the received motion data (and any other relevant data) is analyzed and one or more motion gestures are recognized in the motion data, if any such gestures are present and correctly recognized. The gestures recognized are included in the set of gestures available for the active operating mode. In step 207, one or more states of the device 10 are changed based on the recognized motion gesture(s). The modification of states of the device can be the changing of a status or display, the selection of a function, and/or the execution or activation of a function or program. For example, one or more functions of the device can be performed, such as updating the display screen 16a, answering a telephone call, sending out data to another device, entering a new operating mode, etc., based on which gesture(s) were recognized. The process 200 is then complete at 208.

Examples of types of motion gestures suitable for use with the device 10 are described below.

Shake Gesture

A shake gesture typically involves the user intentionally shaking the motion sensing device in one angular direction to trigger one or more associated functions of the device. For example, the device might be shaken in a "yaw direction," with a peak appearing on only one gyroscope axis. If the user shakes with some cross-axis error (e.g., motion in another axis besides the one gyroscope axis), there may be a peak along another axis as well. The two peaks occur at the same time, and the zero-crossings (corresponding to the change of direction of the motion sensing device during the shaking) also occur at the same time. As there are three axes of rotation (roll, pitch, and yaw), each can be used as a separate shaking command.

For example, Figure 10A is a graph 212 illustrating linear yaw shake motion data 214 forming a yaw shake gesture, in which the majority of the shaking occurs in the yaw axis. A smaller-amplitude cross-axis motion in the pitch axis provides pitch motion data 216, where the yaw and pitch outputs are in phase such that peaks and zero crossings occur at the same time. Figure 10B is a graph 217 illustrating linear pitch shake motion data 218 forming a pitch shake gesture in which the majority of the shaking is in the pitch axis, and some cross-axis motion also occurs in the yaw axis that is in phase with the pitch axis motion, shown by yaw motion data 219.

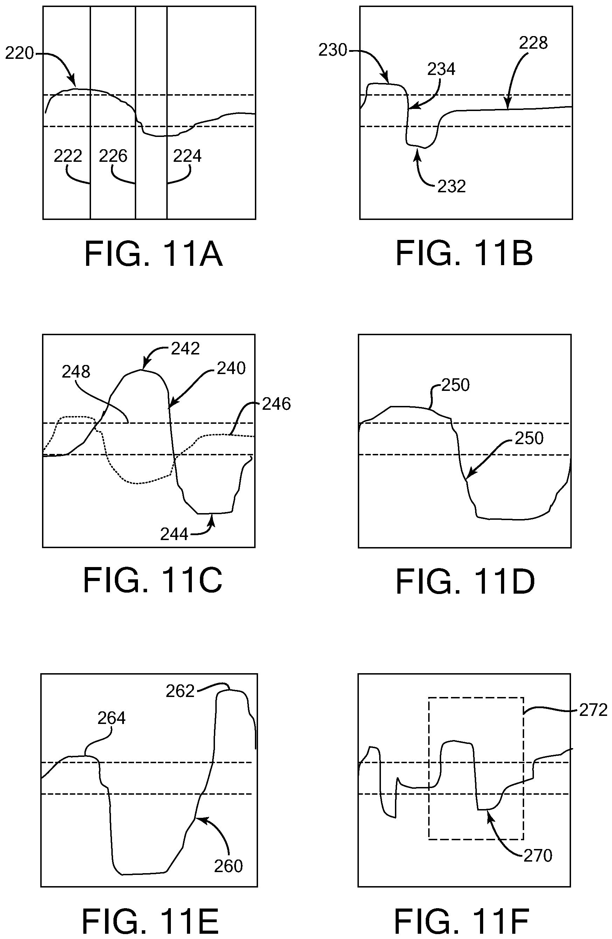

Figures 11A-11F are diagrammatic illustrations of magnitude peaks for gesture recognition. A shake gesture can be any of a variety of intentional shaking of the device 10 by the user. The shaking required to qualify as a shaking gesture requires a magnitude that is at least a threshold level above a background noise level, so that intentional shaking can be distinguished from unintentional shaking. The shaking gesture can be defined to have a predetermined number of direction changes or zero crossings (e.g., angular or linear movement). A shaking gesture can be determined to be complete once a predetermined period of time passes during which no additional large-magnitude pulses are detected.

In Fig. 11A, an example of a basic waveform of a shaking gesture 220 is shown involving a clockwise rotation of the device 10 around an axis (measured by a gyroscope) followed by a counterclockwise rotation of the device around that axis. (Other embodiments of shaking gestures may involve linear movement along different axes to produce analogous peaks). The gesture is processed by feature detectors that look for the peaks (shown by vertical lines 222 and 224) and zero crossings (shown by vertical line 226) where the rotation switches direction. In this example, the gesture can trigger if a positive peak and a negative peak in angular rotation are both detected, and both exceed a threshold magnitude.

In Fig. 11B, a similar gesture 228 is shown to Fig. 11A, but the gesture has been performed by the user more quickly such that the peaks 230 and 232 and zero crossing 234 occur sooner and closer together. A prior standard technique used in this case is Dynamic Time Warping, in which the gesture is heavily processed by warping or stretching the data in time and comparing the result to a database of predefined gesture data. This is not a viable solution in many portable devices because of the large amount of processing required. The present invention instead can time each feature such as peaks and zero crossings. For example, a bank of timers can be used for the data features, each timer associated with one feature. If the features occur within a certain predetermined time of each other, the gesture will be considered recognized and will trigger. This has a similar result as Dynamic Time Warping, but with much less processing, and minimal memory usage.

Fig. 11C shows motion data forming a gesture 240 and performed with more power than in Figs. 11A and 11B, i.e., the peaks 242 and 244 are higher (have a greater magnitude). Also, a false gesture appears, represented by the dotted curve 246 superimposed on the same graph. The false gesture is motion data sensed on an incorrect axis for the desired gesture, due to the user's motion not being very precise. Since the false gesture crosses the upper threshold 248 first, it may trigger first if the gesture engine is not implemented well. Therefore, the present invention delays triggering the gesture until device movement settles to close to zero (or below a threshold close to zero), and then selects the highest peak for gesture recognition, since the first peak detected may not be the correct one.

Fig. 11D shows an example in which simply detecting the highest peak in motion data can be deceptive. The highest peak 252 in motion data 250 is in the wrong direction for the desired gesture, i.e., the peak is negative rather than positive. Thus the method used for the example of Fig. 11C will fail in this example, because the highest peak is not the correct one and the gesture will not be recognized. To reduce misdetection in such a case, the present invention allows the recognition method to remember at least one previous peak and determine if the highest peak had a previous peak on the same axis. This previous peak, in this case peak 252, is examined to determine if it meets the criteria for a gesture.

Fig. 11E shows an example in which the highest peak 262 in the motion data 260 is the correct one for recognizing the desired gesture, but a peak 264 has occurred before the highest peak. Such a previous peak commonly occurs as a "wind-up" movement, which is sometimes performed unconsciously by the user before delivering the desired gesture. In this case, all three peaks are examined (including the negative peak) for the highest peak. If one peak is higher than the others, then it is assumed that the lower peaks are unintended motion, such as a "wind-up" movement before the intended peak, or a "retraction" movement after an intended peak, and the greatest-magnitude peak is selected as the only intended gesture data. However, if one or more peaks are relatively close in magnitude, then each peak can be assumed to be intended gesture data. Typically, wind-up and retraction movements result in small peaks and data features relative to the peaks and features of conscious, desired gestures. A threshold can be used to determine whether a peak qualifies as intended or not. For example, the ratio of one peak (such as the first peak) to the highest peak can be compared to a threshold ratio, where peaks falling below a threshold ratio are considered unintentional and ignored.

Fig. 11F shows motion data 270 having a long, chaotic series of peaks and zero-crossings, due to the user moving the device around without the intention of triggering a gesture. Features similar to the data features shown in Figs. 11A-E are shown in the dashed box 272, which resemble the data features enough such that the associated gesture may trigger falsely. To reduce such a result, a set of "abort conditions" or "trigger conditions" can be added, which are tested and must be avoided or fulfilled for the associated device function to actually trigger (execute). In this case, the trigger conditions can include a condition that the gesture must be preceded by and followed by a predetermined time period in which no significant movement occurs. If there is too much movement, an abort condition can be set which prevents gestures from triggering. An abort condition can be communicated to the user via an icon, for example, which is only visible when the device is ready to receive gestures.

Tap Gesture

A tap gesture typically includes the user hitting or tapping of the device 10 with a finger, hand, or object sufficiently to cause a large pulse of movement of the device in space. The tap gesture can be used to control any of a variety of functions of the device.

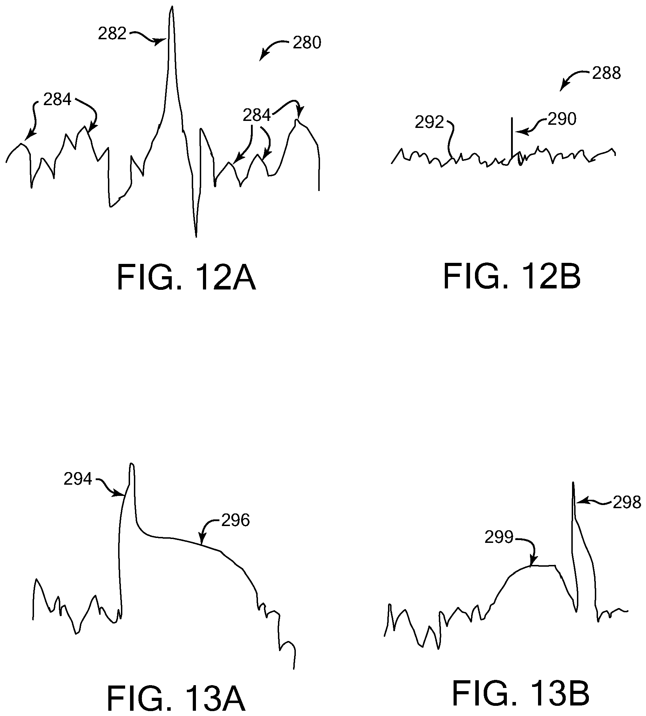

Figures 12A and 12B are diagrammatic illustrations of two examples of motion data for a tap gesture. In these examples, detecting a tap gesture is performed by examining motion sensor data to detect a gesture relative to a background noise floor, as described above. Fig. 12A shows a waveform 280 resulting from a tap gesture when a device 10 is held loosely in the user's hand, and includes a detected tap pulse 282 shown as a large magnitude pulse. In this situation, there may be a lot of background noise indicated by pulses 284 which could falsely trigger a tap gesture. However, an actual intended tap gesture produces a pulse magnitude 282 far above this noise level 284 because the tap gesture significantly moves the device in space, since the device is held loosely. In contrast, Fig. 12B shows a waveform 288 resulting from a tap gesture when a device 10 has been placed on a desk or other hard surface and then tapped. This tap gesture produces a much smaller magnitude pulse 290, since the device cannot move in space as much in response to the tap. The actual tap in this situation will therefore largely be an acoustic response. Still, a detected tap 290 is typically far above the noise level 292. Thus, if the background noise level is considered in the tap detection, tap gestures can be detected more robustly.

Rejecting spikes in motion sensor data due to movement other than tapping can also be difficult. In one method to make this rejection more robust, spikes having significant amplitude are rejected if they occur at the end of device movements (e.g., the end of the portion of motion data being examined). The assumption is that the device 10 was relatively motionless before a tap gesture occurred, so the tap gesture causes a spike at the start of a movement. However, a spike may also appear at the end of a movement, due to a sudden stop of the device by the user. This end spike should be rejected.

Figures 13A and 13B illustrate detecting a tap gesture by rejecting particular spikes in motion data. In Fig. 13A, a spike 294 precedes a curve 296 in the waveform of motion data showing device movement. In Fig. 13B, a spike 298 follows a curve 299 in the waveform. Tap detection can be improved in the present invention by rejecting spikes 298 that follow a curve 299 and/or which occur at or near (within a threshold of) the end of the examined movement, as in Fig. 13B, which shows an abrupt movement of the device 10 at the end of movement, and not an intended gesture. Such spikes typically indicate stopping of the device and not an intentional gesture. A spike is detected as a tap gesture if the spike 294 precedes the curve 296, as shown in Fig. 13A, which indicates an intended spike of movement followed by movement of less magnitude (the curve). Note that the spike and the curve may appear on different sensors or motion axes of the device.

Tap gestures can be used in a variety of ways to initiate device functions in applications or other programs running on the device. For example, in one example embodiment, tapping can be configured to cause a set of images to move on a display screen such that a previously-visible or highlighted image moves and a next image available becomes highlighted or otherwise visible. Since tapping has no direction associated with it, this tap detection may be coupled with an additional input direction detection to determine which direction the images should move. For example, if the device is tilted in a left direction, the images move left on a display screen. If the device is tilted in a backward direction, the images move backward, e.g., moving "into" the screen in a simulated 3rd dimension of depth. This feature allows the user to simultaneously control the time of movement of images (or other displayed objects) and the direction of movement of the images using tilting and tap gestures.

Other Gestures

Some examples of other gestures suitable for use with the present invention are described below.

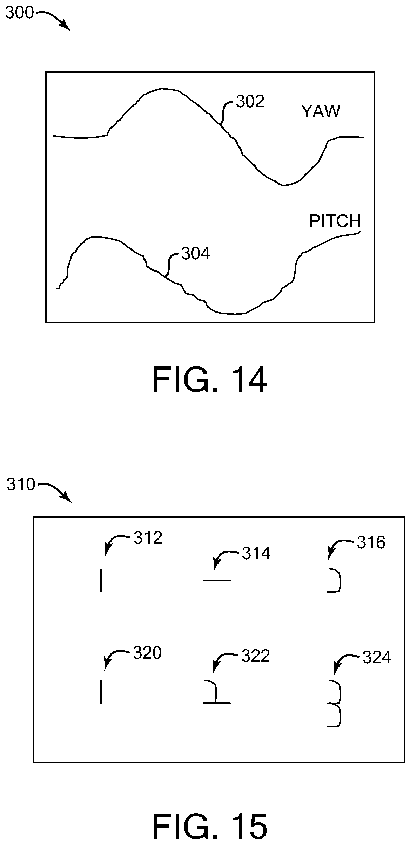

Figure 14 is a graph 300 illustrating an example of motion data for a circle gesture. For this gesture, the user moves the motion sensing device in a quick, approximately circular movement in space. The peaks of amplitude appear on two axes, such as, for example, pitch 302 and yaw 304 as shown in Fig. 14. As shown, the peaks and zero-crossings are out of phase for a circle gesture, occurring at different times.

Figure 15 is a diagrammatic illustration 310 illustrating examples of character gestures. A character gesture is created by motion of the device 10 in space that approximately follows the form of a particular character. The motion gesture is recognized as a particular character, which can activate a function corresponding to the character. For example, some commands in particular application programs can be activated by pressing key(s) on a keyboard corresponding to a character; in some embodiments. Such a command can alternatively be activated by inputting a motion gesture that is detected as that same character, alone or in combination with providing some other input to the device 10.

Characters (including letters, numbers, and other symbols) can be considered as combinations of linear and circle movements of the device 10. By combining the detection algorithms for lines and circles, characters can be detected. Since precise angular movement on the part of the user is usually not possible, the representation can be approximate.

Fig. 15 shows some examples. A linear pitch gesture 312, a linear yaw gesture 314, and a half-circle gesture 316 can be detected individually and combined to create characters. For example, a "1" character 320 can be detected as a linear pitch gesture. A "2" character 322 can be defined as a half-circle followed by a horizontal line. A "3" character 324 can be defined as two half-circle gestures. As long as there is no other gesture that has the same representation, this representation should be accurate enough, and will give the user room for imprecise movement. Other gestures can be detected to provide other portions of desired characters, such as triangles, circles, hooks, angles, etc. A variety of different gestures can be defined for different characters, and are recognized when the device is moved through space to trace out these characters.

Other gestures can also be defined as desired. Any particular gesture can be defined as requiring one or more of the above gestures, or other types of gestures, in different combinations. For example, gestures for basic yaw, pitch, and roll movements of the device 10 can be defined, as movements in each of these axes. These gestures can also be combined with other gestures to define a compound gesture.

In addition, in some embodiments a gesture may be required to be input and detected multiple times, for robustness, i.e., to make sure the intended gesture has been detected. For example, three shake gestures may be required to be detected, in succession, to detect the three as a single gesture and to implement the function(s) associated with the shake gesture. Or, three tap gestures may be required to be detected instead of just one.

Applications using a Motion Control

One feature of the present invention for increasing the ability to accurately detect motion gestures involves using gestures (device motion) in combination with input detected from an input control device of the motion sensing device 10. The input control provides an indication for the device to detect gestures during device motion intended by the user for gesture input. For example, a button, switch, knob, wheel, or other input control device, all referred to herein as a "motion control" 36 (as shown in Fig. 1), can be provided on the housing of the motion sensing device 10, which the user can push or otherwise activate. A dedicated hardware control can be used, or alternatively a software / displayed control (e.g. a displayed button or control on a touchscreen) can be used as the motion control.

The motion control on the device can be used to determine whether the device is in a "motion mode" or not. When the device is in a motion mode, the processor or other controller in the device 10 can allow motion of the device to be detected to modify the state of the device, e.g., detected as a gesture. For example, when the motion control is in its inactive state, e.g., when not activated and held by the user, the user moves the device naturally without modifying the state of the device. However, while the motion control is activated by the user, the device is moved to modify one or more states of the device. The modification of states of the device can be the selection of a function and/or the execution or activation of a function or program. For example, a function can be performed on the device in response to detecting a gesture from motion data receiving while in the motion mode. The device exits the motion mode based on a detected exit event. For example, in this embodiment, the exit event occurs when the motion control is released by the user and the activation signal from the motion control is no longer detected. In some embodiments, the modification of states of the device based on the motion data only occurs after the motion mode has been exited, e.g., after the button is released in this embodiment. When not in the motion mode, the device (e.g. processor or other applicable controller in the device) ignores input sensed motion data for the purposes of motion gesture recognition. In some embodiments, the sensed motion data can still be input and used for other functions or purposes, such as computing a model of the orientation of the device as described previously; or only particular predetermined types of gestures or other motions can still be input and/or recognized, such as a tap gesture which in some embodiments may not function well when used with some embodiments of a motion control. In other embodiments, all sensed motion data is ignored for any purposes when not in motion mode, e.g., the sensors are turned off. For example, the release of the button may cause a detected spike in device motion, but this spike occurs after release of the button and so is ignored.

The operation of a motion mode of the device can be dependent on the operating mode of the device. For example, the activation of a motion control to enter motion mode may be required for the user to input motion gestures while the device is in some operating modes, while in other operating modes of the device, no motion control activation is required. For example, when in an image display operating mode which allows scrolling a set of images or other objects across a display screen 16a of the device based on movement of the device, the activation of a motion mode may be required (e.g., by the user holding down the motion control). However, when in a telephone mode in which the user can make or answer cell phone calls, no motion mode activation or motion control activation need be required for the user to input motion gestures to answer the phone call or perform other telephone functions on the device 10. In addition, different operating modes of the device 10 can use the motion control and motion mode in different ways. For example, one operating mode may allow motion mode to be exited only by the user deactivating the motion control, while a different operating mode may allow motion mode to be exited by the user inputting a particular motion gesture.

As an example, a set of icons may be displayed on the display screen of the device that are not influenced by movement of the device while the motion control is not activated. When the motion control on the device is depressed, the motion of the device as detected by the motion sensors can be used to determine which icon is highlighted, e.g. move a cursor or indicator to different icons. This motion can be detected as, for example, rotation in a particular axis, or in more than one axis (which can be considered a rotation gesture), where the device is rotated in space; or alternatively, as a linear motion or a linear gesture, where the device is moved linearly in space. When the motion control is released, the icon highlighted at release is executed to cause a change of one or more states in the device, e.g., perform an associated function, such as starting an application program associated with the highlighted icon. To aid the user in selecting an icon, additional visual feedback can be presented which is correlated with device motion, such as including a continuously moving cursor overlayed on top of the icons in addition to a discretely moving indicator or cursor that moves directly from icon to icon, or continuously moving an icon a small amount (correlated with device motion) to indicate that particular icon would be selected if the motion control were released.

In another application, a set of images may be displayed in a line on the display screen. When the motion control is depressed, the user can manipulate the set of images forward or backward by moving the device in a positive or negative direction, e.g. as a gesture, such as tilting or linearly moving the device forward (toward the user, as the user looks at the device) or backward (away from the user). When the user moves the device past a predetermined threshold magnitude (e.g., tilting the device more than a predetermined amount), the images may be moved continuously on the screen without additional input from the user. When the motion control is released, the device 10 controls the images to stop moving.

In another application, holding down the button may initiate panning or zooming within an image, map, or web page displayed on a display screen of the device. Rotating the device along different axes may cause panning the view of the display screen along corresponding axes, or zooming along those axes. The different functions may be triggered by different types of movements, or they may be triggered by using different buttons. For example, one motion control can be provided for panning, and a different motion control provided for zooming. If different types of movements are used, thresholding may be used to aid in determining which function should be triggered. For example, if a panning motion is moving the device in one axis and a zooming motion is moving the device in a different axis, both panning and zooming can be activated by moving the device along both axes at once. However, if a panning movement is executed past a certain threshold amount of movement, than the device can implement only panning, ignoring the movement on the zooming axis.

In some embodiments, the motion control need not be held by the user to activate the motion mode of the device, and/or the exit event is not the release of the motion control. For example, the motion control can be "clicked," i.e., activated (e.g., pressed) and then released immediately, to activate the motion mode that allows device motion to modify one or more states of the device. The device remains in motion mode after the motion control is clicked. A desired predefined exit event can be used to exit the motion mode when detected, so that device motion no longer modifies device states. For example, a particular shake gesture can be detected from the motion data, from motion provided by the user (such as a shake gesture having a predetermined number of shakes) and, when detected, exits motion mode. Other types of gestures can be used in other embodiments to exit the motion mode. In still other embodiments, the exit event is not based on user motion. For example, motion mode can be exited automatically based on other criteria, such as the completion of a detected gesture (when the gesture is detected correctly by the device).

Data Features for Recognizing Gestures

In order to resolve and process human motion on a device 10, it is necessary to acquire sensor data at high rates. For example, a sampling rate such as 100 Hz may be needed. For a one-second gesture and assuming six motion sensors are provided on the device, such a sampling rate requires processing 600 data points for 6 degrees of freedom of motion. However, it is rarely necessary to process all 600 data points, since the human motion can be reduced by extracting important features from the sensor data, such as the magnitude of peaks in the motion waveform, or the particular times of zero crossings. Such data features typically occur at about 2 Hz when the user is performing gestures. Thus, for example, if four features are examined for each of the 6 degrees of freedom, the total number of data points during one second of motion will be 48 points. The amount of data to be processed has thus been reduced by more than a factor of 10 by concentrating only on particular features of movement data, rather than processing all data points describing all of the motion.

Some example methods of reducing the required sampling rate of data for a device processor by using hardware to find features in motion sensor data is described in copending patent application No. 12/106,921.

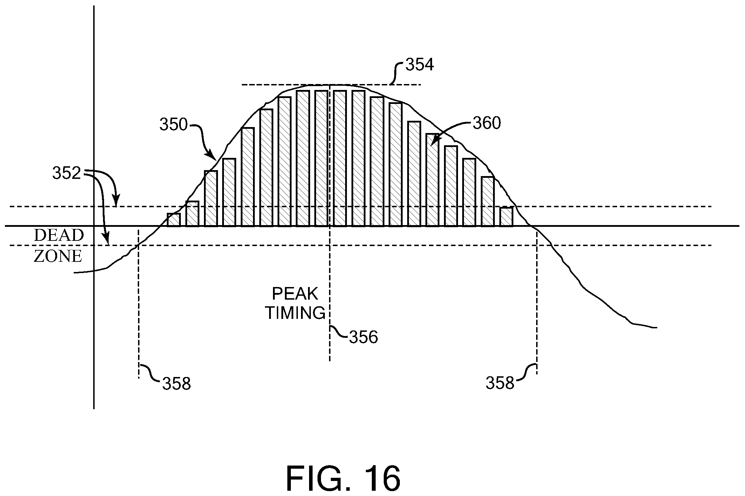

Figure 16 is a diagrammatic illustration showing one example of a set of data features of device movement that can be processed for gestures. Waveform 350 indicates the magnitude (vertical axis) of movement of the device over time (horizontal axis). A dead zone 352 can be designated at a desired magnitude when detecting data features for gestures, where the dead zone indicates a positive value and a negative value of magnitude approximately equal to a typical or determined noise magnitude level. Any motion data falling between these values, within the dead zone, is ignored as indistinguishable over background noise (such as the user unintentionally shaking the device 10).

Data features, as referred to herein, are characteristics of the waveform 350 of motion sensor data that can be detected from the waveform 350 and which can be used to recognize that a particular gesture has been performed. Data features can include, for example, a maximum (or minimum) height (or magnitude) 354 of the waveform 350, and a peak time value 356 which is the time at which the maximum height 354 occurred. Additional data features can include the times 358 at which the waveform 350 made a zero crossing (i.e., a change in direction of motion in an axis of movement, such as transitioning from positive values to negative values or vice-versa). Another data feature can include the integral 360 providing a particular area of the waveform 350, such as an integral of the interval between two zero crossings 358 as shown in Fig. 16. Another data feature can include the derivative of the waveform 350 at a particular zero crossing 358. These data features can be extracted from motion sensor data and stored and processed for gesture recognition more quickly and easily than storing and processing all of the motion sensor data of the waveform. Other data features can be used in other embodiments, such as the curvature of the motion waveform 350 (e.g., how smooth the waveform is at different points), etc. In some embodiments, the particular data features which are examined are based on the present operating mode of the device 10, where different operating modes require different features to be extracted and processed as appropriate for the application(s) running in a particular operating mode.

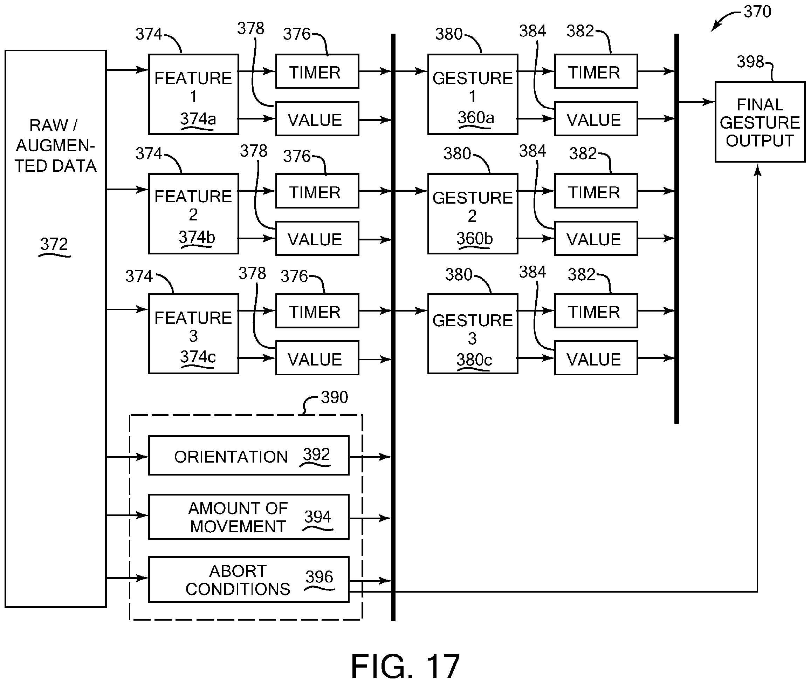

Figure 17 is a block diagram illustrating one example of a system 370 which can recognize and process gestures, including the data features described above with reference to Fig. 16. System 370 can be included in the device 10 in the MPU 20, or in the processor 12, or as a separate unit.

System 370 includes a raw data and pre-processing block 372, which receives the raw data from the sensors and also provides or receives augmented data as described above with reference to Fig. 7, e.g. data in reference to device coordinates and world coordinates. The raw sensor data and augmented sensor data is used as a basis for gesture recognition. For example, the pre-processing block 372 can include all or part of the system 150 described above with reference to Fig. 7.

The raw and augmented data is provided from block 372 to a number of low-level data feature detectors 374, where each detector 374 detects a different feature in the sensor data. For example, Feature 1 block 374a can detect the peaks in motion waveforms, Feature 2 block 374b can detect zero crossings in motion waveforms, and Feature 3 block 374c can detect and determine the integral of the area under the waveform. Additional feature detectors can be used in different embodiments. Each feature detector 374 provides timer values 376, which indicate the time values appropriate to the data feature detected, and provides magnitude values 378, which indicates magnitudes appropriate to the data feature detected (peak magnitudes, value of integral, etc.).

The timer and magnitude values 378 and 376 are provided to higher-level gesture detectors 380. Gesture detectors 380 each use the timing and magnitude values 378 and 376 from all the feature detectors 374 to detect whether the particular gesture associated with that detector has occurred. For example, gesture detector 380a detects a particular Gesture 1, which may be a tap gesture, by examining the appropriate time and magnitude data from the feature detectors 374, such as the peak feature detector 374a. Similarly, gesture detector 380b detects a particular Gesture 2, and gesture detector 380c detects a particular Gesture 3. As many gesture detectors 380 can be provided as different types of gestures that are desired to be recognized on the device 10.

Each gesture detector 380 provides timer values 382, which indicate the time values at which the gesture was detected, and provides magnitude values 384, which indicate magnitude values describing the data features of the gesture that was detected (peak, integral, etc.).

The raw and augmented data 372 also is provided to a monitor 390 that monitors states and abort conditions of the device 10. Monitor 390 includes an orientation block 392 that determines an orientation of the device 10 using the raw and augmented data from processing block 372. The device orientation can be indicated as horizontal, vertical, or other states as desired. This orientation is provided to the gesture detectors 380 for use in detecting appropriate gestures (such as gestures requiring a specific device orientation or a transition from one orientation to another orientation). Monitor 390 also includes a movement block 394 which determines the amount of movement that the device 10 has moved in space, e.g. angular and linear movement, using the raw and augmented sensor data from block 372. The amount of movement is provided to gesture detectors 380 for use in detecting gestures (such as gestures requiring a minimum amount of movement of the device 10).

Abort conditions 396 are also included in monitor 390 for use in determining whether movement of the device 10 aborts a potentially recognized gesture. The abort conditions include conditions that, when fulfilled, indicate that particular device movement is not a gesture. For example, the background noise described above can be determined, such that movement within the noise amplitude is caused to be ignored by using the abort conditions 396. In another example, certain spikes of motion, such as a spike following a curve as described above with reference to Figs. 13A and 13B, can be ignored, i.e. cause gesture recognition to be aborted for the spike. In another example, if only small or subtle movement is being examined by all the gesture detectors 380, then large movements over a predetermined threshold magnitude can be ignored using the abort conditions 396. The abort conditions block 396 sends abort indications corresponding to current (or designated) portions of the sensor data to the gesture detectors 380 and also sends abort indications to a final gesture output block 398.

Final gesture output block 398 receives all the timer and magnitude values from the gesture detectors 380 and also receives the abort indicators from abort conditions block 396. The final block 398 outputs data for non-aborted gestures that were recognized by the gesture detectors 380. The output data can be to components of the device 10 (software and/or hardware) that process the gestures and perform functions in response to the recognized gestures.

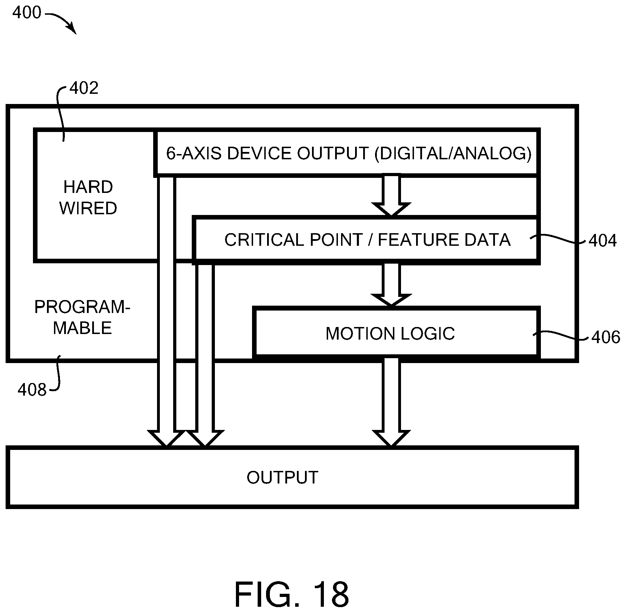

Figure 18 is a block diagram 400 illustrating one example of distributing the functions of the gesture recognition system 370 of Fig. 17. In this example, six axes of motion sensor output (e.g., three gyroscopes 26 and three accelerometers 28) are provided as hard-wired hardware 402. The motion sensors output their raw sensor data to be processed for augmented data and for data features in block 404, and this feature processing block 404 is also included in the hard-wired hardware block 402. Thus, some or all of gesture recognition system 370 can be incorporated in hardware on each motion sensor itself (gyroscope and/or accelerometer). For example, a motion sensor may include a hardware accelerator for calculating augmented data, such as a coordinate transform from device coordinates to world coordinates. The hardware accelerator may output transformed data, and the hardware accelerator may include additional processing to reduce augmented data further into data features. Alternatively, the accelerator can output the transformed data from the hard-wired block 402.

The features from block 404 can be output to a motion logic processing block 406, which is included in a programmable block 408 of the device 10. The programmable block 408, for example, can be implemented as software and/or firmware implemented by a processor or controller. The motion logic can include numerical output and in some embodiments gesture output.

In alternative embodiments, the entire gesture system 370 may run on an external processor that receives raw data from the motion sensors and hard-wired block 402. In some embodiments, the entire gesture system 370 may run in the hard-wired hardware on/with the motion sensors.

Many of the above-described techniques and systems can be implemented with additional or alternate types of sensor than the gyroscopes and/or accelerometers described above. For example, a six-axis motion sensing device including the gesture recognition techniques described above can include three accelerometers and three compasses.

Other types of usable sensors can include optical sensors (visible, infrared, ultraviolet, etc.), magnetic sensors, etc.

**Claims**

1. A method (200) for processing motion of a portable electronic device (10) to control the portable electronic device, the method comprising:

   receiving (203), on the portable electronic device, sensed motion data derived from motion sensors (26, 28) of the portable electronic device, wherein the sensed motion data is based on movement of the portable electronic device in space, the motion sensors providing six-axis motion sensing and including at least three rotational motion sensors and at least three accelerometers;
   determining (204), on the portable electronic device, a particular operating mode that is active while the movement of the portable electronic device occurs, wherein the particular operating mode is one of a plurality of different operating modes available in the operation of the portable electronic device;
   recognizing (206), on the portable electronic device, a shake gesture along an axis from the motion data;
   wherein the shake gesture requires a magnitude that is at least a threshold level above a background noise level so that intentional shaking can be distinguished from unintentional shaking;
   wherein the shake gesture is defined to have a predetermined number of direction changes;
   wherein recognizing the shake gesture comprises delaying triggering the gesture until device movement settles below a threshold close to zero and then selecting a highest peak of the motion data for gesture recognition to determine the axis for the shake gesture;
   wherein the shake gesture is recognized from a set of a plurality of motion gestures that are available for recognition in the active operating mode of the portable electronic device, and wherein each of the different operating modes of the portable electronic device, when active, has a different set of motion gestures available for recognition; and
   changing one or more states of the portable electronic device based on the recognized shake gesture, including changing output of a display screen (16a) on the portable electronic device.

2. A portable electronic device (10) for sensing motion gestures, the portable electronic device comprising:

   a plurality of motion sensors (26, 28) configured to provide sensed data based on movement of the portable electronic device in space, the motion sensors providing six-axis motion sensing and including at least three rotational motion sensors and at least three accelerometers;
   a display screen (16a); and
   one or more processors (12), wherein at least one of the processors is configured to:

   receive motion data derived from the sensed data provided by the motion sensors;
   determine a particular operating mode that is active while the movement of the portable electronic device occurs, wherein the particular operating mode is one of a plurality of different operating modes available in the operation of the portable electronic device;
   recognize a shake gesture along an axis from the motion data;
   wherein the shake gesture requires a magnitude that is at least a threshold level above a background noise level so that intentional shaking can be distinguished from unintentional shaking;
   wherein the shake gesture is defined to have a predetermined number of direction changes;
   wherein recognizing the shake gesture comprises delaying triggering the gesture until device movement settles below a threshold close to zero and then selecting a highest peak of the motion data for gesture recognition to determine the axis for the shake gesture;
   wherein the shake gesture is recognized from a set of a plurality of motion gestures that are available for recognition in the active operating mode of the portable electronic device, and wherein each of the different operating modes of the portable electronic device, when active, has a different set of motion gestures available for recognition; and change one or more states of the portable electronic device based on the recognized shake gesture, including changing output of the display screen.

**Patentansprüche**

1. Verfahren (200) zum Verarbeiten von Bewegung einer tragbaren elektronischen Vorrichtung (10), um die tragbare elektronische Vorrichtung zu steuern, das Verfahren Folgendes umfassend:

Erhalten (203) auf der tragbaren elektronischen Vorrichtung von abgetasteten Bewegungsdaten, die aus Bewegungssensoren (26, 28) der tragbaren elektronischen Vorrichtung abgeleitet sind, wobei die abgetasteten Bewegungsdaten auf einer Bewegung der tragbaren elektronischen Vorrichtung im Raum basieren, wobei die Bewegungssensoren ein Abtasten von Bewegung um sechs Achsen bereitstellen und mindestens drei Rotationsbewegungssensoren und mindestens drei Beschleunigungsaufnehmer umfassen;

Bestimmen (204) auf der tragbaren elektronischen Vorrichtung einer bestimmten Betriebsart, die während des Auftretens der Bewegung der tragbaren elektronischen Vorrichtung aktiv ist, wobei die bestimmte Betriebsart eine von mehreren verschiedenen Betriebsarten ist, die beim Betrieb der tragbaren elektronischen Vorrichtung verfügbar sind;

Erkennen (206) auf der tragbaren elektronischen Vorrichtung einer Schüttelgeste entlang einer Achse aus den Bewegungsdaten;

wobei die Schüttelgeste eine Größenordnung erfordert, die mindestens einen Schwellenpegel oberhalb eines Grundrauschpegels liegt, so dass absichtliches Schütteln von unabsichtlichem Schütteln unterschieden werden kann;

wobei die Schüttelgeste definiert ist, dass sie eine vorgegebene Anzahl von Richtungsänderungen aufweist;

wobei Erkennen der Schüttelgeste Verzögern eines Auslösens der Geste, bis eine Bewegung der Vorrichtung unter einen Schwellenwert nahe null sinkt, und dann Auswählen eines höchsten Spitzenwerts der Bewegungsdaten zur Gestenerkennung umfasst, um die Achse für die Schüttelgeste zu bestimmen;

wobei die Schüttelgeste aus einer Menge mehrerer Bewegungsgesten erkannt wird, die zur Erkennung in der aktiven Betriebsart der tragbaren elektronischen Vorrichtung verfügbar sind, und wobei jede der verschiedenen Betriebsarten der tragbaren elektronischen Vorrichtung, wenn sie aktiv ist, eine verschiedene Menge Bewegungsgesten aufweist, die zur Erkennung verfügbar sind; und

Ändern eines oder mehrerer Zustände der tragbaren elektronischen Vorrichtung auf der Grundlage der erkannten Schüttelgeste, umfassend Ändern einer Ausgabe eines Anzeigeschirms (16a) auf der tragbaren elektronischen Vorrichtung.

2. Tragbare elektronische Vorrichtung (10) zum Abtasten von Bewegungsgesten, die tragbare elektronische Vorrichtung Folgendes umfassend:

mehrere Bewegungssensoren (26, 28), die konfiguriert sind, abgetastete Daten bereitzustellen, die auf einer Bewegung der tragbaren elektronischen Vorrichtung im Raum basieren, wobei die Bewegungssensoren ein Abtasten von Bewegung um sechs Achsen bereitstellen und mindestens drei Rotationsbewegungssensoren und mindestens drei Beschleunigungsaufnehmer umfassen;

einen Anzeigeschirm (16a); und

einen oder mehrere Prozessoren (12), wobei mindestens einer der Prozessoren konfiguriert ist, um:

Bewegungsdaten zu erhalten, die aus den abgetasteten Daten abgeleitet sind, die durch die Bewegungssensoren bereitgestellt werden;

eine bestimmte Betriebsart zu bestimmen, die während des Auftretens der Bewegung der tragbaren elektronischen Vorrichtung aktiv ist, wobei die bestimmte Betriebsart eine von mehreren verschiedenen Betriebsarten ist, die beim Betrieb der tragbaren elektronischen Vorrichtung verfügbar sind;

eine Schüttelgeste entlang einer Achse aus den Bewegungsdaten zu erkennen;

wobei die Schüttelgeste eine Größenordnung erfordert, die mindestens einen Schwellenpegel oberhalb eines Grundrauschpegels liegt, so dass absichtliches Schütteln von unabsichtlichem Schütteln unterschieden werden kann;

wobei die Schüttelgeste definiert ist, dass sie eine vorgegebene Anzahl von Richtungsänderungen aufweist;

wobei Erkennen der Schüttelgeste Verzögern eines Auslösens der Geste, bis eine Bewegung der Vorrichtung unter einen Schwellenwert nahe null sinkt, und dann Auswählen eines höchsten Spitzenwerts der Bewegungsdaten zur Gestenerkennung umfasst, um die Achse für die Schüttelgeste zu bestimmen;

wobei die Schüttelgeste aus einer Menge mehrerer Bewegungsgesten erkannt wird, die zur Erkennung in der aktiven Betriebsart der tragbaren elektronischen Vorrichtung verfügbar sind, und wobei jede der verschiedenen Betriebsarten der tragbaren elektronischen Vorrichtung, wenn sie aktiv ist, eine verschiedene Menge Bewegungsgesten aufweist, die zur Erkennung verfügbar sind; und

einen oder mehrere Zustände der tragbaren elektronischen Vorrichtung auf der Grundlage der erkannten Schüttelgeste zu ändern, umfassend Ändern einer Ausgabe des Anzeigeschirms.

**Revendications**

1.  Procédé (200) de traitement d'un mouvement d'un dispositif électronique portable (10) afin de commander le dispositif électronique portable, le procédé comprenant :

    la réception (203), sur le dispositif électronique portable, de données de mouvement détectées obtenues auprès de détecteurs de mouvement (26, 28) du dispositif électronique portable, les données de mouvement détectées étant basées sur un déplacement du dispositif électronique portable dans l'espace, les détecteurs de mouvement assurant une détection de mouvement sur six axes et comportant au moins trois détecteurs de mouvement de rotation et au moins trois accéléromètres ;
    la détermination (204), sur le dispositif électronique portable, d'un mode de fonctionnement particulier qui est actif alors que le déplacement du dispositif électronique portable se produit, le mode de fonctionnement particulier consistant en l'un d'une pluralité de modes de fonctionnement différents disponibles pour le fonctionnement du dispositif électronique portable ;
    la reconnaissance (206), sur le dispositif électronique portable, d'un geste de secousse suivant un axe à partir des données de mouvement ;
    le geste de secousse exigeant une amplitude qui est d'au moins un niveau de seuil au-dessus d'un niveau de bruit de fond de façon à permettre de distinguer une secousse volontaire d'une secousse involontaire ;
    le geste de secousse étant défini de manière à présenter un nombre prédéterminé de changements de direction ;
    la reconnaissance du geste de secousse comprenant la temporisation du déclenchement du geste jusqu'à ce que le déplacement du dispositif se stabilise sous un seuil proche de zéro, suivie de la sélection d'un pic le plus élevé des données de mouvement pour la reconnaissance du geste dans le but de déterminer l'axe pour le geste de secousse ;
    le geste de secousse étant reconnu parmi un ensemble d'une pluralité de gestes de mouvement qui sont disponibles pour la reconnaissance dans le mode de fonctionnement actif du dispositif électronique portable, et chacun des modes de fonctionnement différents du dispositif électronique portable, lorsqu'il est actif, présentant un ensemble différent de gestes de mouvement disponibles pour la reconnaissance ; et
    la modification d'un ou de plusieurs états du dispositif électronique portable sur la base du geste de secousse reconnu, notamment la modification de la sortie d'un écran d'affichage (16a) sur le dispositif électronique portable.

2.  Dispositif électronique portable (10) permettant la détection de gestes de mouvement, le dispositif électronique portable comprenant :

    une pluralité de détecteurs de mouvement (26, 28) configurés pour fournir des données détectées sur la base d'un déplacement du dispositif électronique portable dans l'espace, les détecteurs de mouvement assurant une détection de mouvement sur six axes et comportant au moins trois détecteurs de mouvement de rotation et au moins trois accéléromètres ;
    un écran d'affichage (16a) ; et
    un ou plusieurs processeurs (12), au moins un des processeurs étant configuré pour :

       recevoir des données de mouvement obtenues à partir des données détectées fournies par les détecteurs de mouvement ;
       déterminer un mode de fonctionnement particulier qui est actif alors que le déplacement du dispositif électronique portable se produit, le mode de fonctionnement particulier consistant en l'un d'une pluralité de modes de fonctionnement différents disponibles pour le fonctionnement du dispositif électronique portable ;
       reconnaître un geste de secousse suivant un axe à partir des données de mouvement ;
       le geste de secousse exigeant une amplitude qui est d'au moins un niveau de seuil au-dessus d'un niveau de bruit de fond de façon à permettre de distinguer une secousse volontaire d'une secousse involontaire ;
       le geste de secousse étant défini de manière à présenter un nombre prédéterminé de changements de direction ;
       la reconnaissance du geste de secousse comprenant la temporisation du déclenchement du geste jusqu'à ce que le déplacement du dispositif se stabilise sous un seuil proche de zéro, suivie de la sélection d'un pic le plus élevé des données de mouvement pour la reconnaissance du geste dans le but de déterminer l'axe pour le geste de secousse ;
       le geste de secousse étant reconnu parmi un ensemble d'une pluralité de gestes de mouvement qui sont disponibles pour la reconnaissance dans le mode de fonctionnement actif du dispositif électronique portable, et chacun des modes de fonctionnement différents du dispositif électronique portable, lorsqu'il est actif, présentant un ensemble différent de gestes de mouvement disponibles pour la reconnaissance ; et modifier un ou plusieurs états du dispositif électronique portable sur la base du geste de secousse reconnu, notamment modifier la sortie de l'écran d'affichage.

FIG. 1

FIG. 2

FIG. 3A

FIG. 3B

FIG. 4A

FIG. 4B

FIG. 5A    FIG. 5B    FIG. 5C

FIG. 6A    FIG. 6B    FIG. 6C

FIG. 7

FIG. 8A

FIG. 8B

FIG. 10A

FIG. 10B

200

START 202

RECEIVE SENSED
MOTION DATA 203

DETERMINE ACTIVE
OPERATING MODE
OF DEVICE 204

SELECT SET OF GESTURES
WHICH CAN BE RECOGNIZED
IN ACTIVE OPERATING MODE 205

ANALYZE MOTION DATA TO
RECOGNIZE MOTION
GESTURE(S) 206

ONE OR MORE
STATES OF DEVICE CHANGED
BASED ON RECOGNIZED
MOTION GESTURE(S) 207

DONE 208

# FIG. 9

FIG. 11A

FIG. 11B

FIG. 11C

FIG. 11D

FIG. 11E

FIG. 11F

FIG. 12A

FIG. 12B

FIG. 13A

FIG. 13B

300

302

YAW

304

PITCH

## FIG. 14

310

312

314

316

320

322

324

## FIG. 15

FIG. 16

FIG. 17

EP 2 350 782 B1

400

402

6-AXIS DEVICE OUTPUT (DIGITAL/ANALOG)

HARD
WIRED

CRITICAL POINT / FEATURE DATA — 404

PROGRAM-
MABLE

MOTION LOGIC — 406

408

OUTPUT

FIG. 18

**REFERENCES CITED IN THE DESCRIPTION**

**Patent documents cited in the description**

- US 2005212751 A
- WO 2006046098 A
- US 2007125852 A
- US 106921 A
- US 77448807 A
- WO 12106921 A